# EUROPEAN PATENT APPLICATION

(11) **EP 4 123 490 A1**
(43) Date of publication of application: **25.01.2023**
(21) Application number: 21770715.7
(22) Date of filing: 16.03.2021
(51) Int. Cl.: G06F 21/62

(54) **DATA PROCESSING DEVICE, DATA PROCESSING METHOD, DATA PROCESSING PROGRAM, DATA EXTRACTION DEVICE, DATA EXTRACTION METHOD, AND DATA EXTRACTION PROGRAM**

(30) Priority: 18.03.2020 JP 2020047441
(71) Applicant: Sony Group Corporation, Tokyo 108-0075 (JP)
(72) Inventor: UMEDA, Tetsuo, Tokyo 108-0075 (JP)
(74) Representative: MFG Patentanwälte Meyer-Wildhagen Meggle-Freund Gerhard PartG mbB
(86) International application number: PCT/JP2021/010485
(87) International publication number: WO 2021/187449

(57) **Abstract**

Provided is a data processing device including a hash processing unit that generates hash data from a plurality of pieces of original data included in a first data set and generates a hash data set to be transmitted to a data extraction device, and a noise addition unit configured to perform a first noise addition process for adding noise to the hash data.

## Description

### TECHNICAL FIELD

The present technology relates to a data processing device, a data processing method, a data processing program, a data extraction device, a data extraction method, and a data extraction program.

### BACKGROUND ART

In recent years, with the development of the Internet and the spread of devices connectable to the Internet, various data in the devices are collected by companies that provide Internet services, companies that develop and know the devices, and the like, and are used for service improvement, product development, and the like. One of useful pieces of data among such data is data about individual users who use the device. There are various types of data regarding the individual users, such as how the devices are used and how the service on the Internet is used via the devices.

Such personal data of the users has high utility value, but there is a problem that privacy of the users is violated by data leakage, a data handling method, and the like. Therefore, a technology called differential privacy is used to prevent invasion of privacy.

The differential privacy is a technology that adds noise to data to be collected so that the data itself can be used while preventing a user and the like who is a subject of the data from being specified. It is possible to prevent statistical reliability from being given to a hypothesis that "certain data is data of a specific user" more than a certain level. Mathematical safety is given even to attacks based on arbitrary background knowledge, and thus, there is a feature that the influence on privacy can be quantitatively evaluated. By using differential privacy, it is possible to prevent privacy infringement of a user even in a case where data is collected without consent of the user. The differential privacy includes output type differential privacy and local differential privacy.

The output type differential privacy is managed by a database built in a cloud by collecting raw data from devices. When the data user accesses the database to utilize the data, the data is disclosed by adding noise to the data, thereby protecting the privacy of the user. Since the business operator providing the cloud service manages the raw data, there are concerns about a psychological barrier of the user against collecting the raw data, a business risk of the business operator in a case where the data is leaked, and the like.

The local differential privacy is a method in which noise is added by a device at hand of a user and anonymized data is collected in the cloud. At the time of data utilization, it is possible to obtain a statistical value obtained by removing the noise from the cloud. Since data is collected in an anonymized state, a psychological barrier of the user is low, and a business risk of the business operator in a case where the data is leaked is also low.

### CITATION LIST

### PATENT DOCUMENT

Patent Document 1: RAPPOR: Randomized Aggregatable Privacy-Preserving Ordinal Response

### SUMMARY OF THE INVENTION

### PROBLEMS TO BE SOLVED BY THE INVENTION

Currently, Google's RAPPOR, which has been evaluated as a local differential privacy benchmark, can handle 10,000 types of data. However, to handle more data types like one million types of data types for example, 100 trillion pieces of data are required, and there is a problem that data cannot be substantially handled if the number of data types is too large.

The present technology has been made in view of such a point, and an object of the present technology is to provide a data processing device, a data processing method, a data processing program, a data extraction device, a data extraction method, and a data extraction program capable of reducing the amount of data and making it easy to handle data while suppressing an influence on an analysis result even in a case where it is difficult to analyze data due to a large amount of data.

### SOLUTIONS TO PROBLEMS

In order to solve the above-described problem, a first technology is a data processing device including: a hash processing unit that generates hash data from a plurality of pieces of original data included in a first data set and generates a hash data set to be transmitted to a data extraction device; and a noise addition unit configured to perform a first noise addition process for adding noise to the hash data.

In addition, a second technology is a data processing method including: generating hash data from a plurality of pieces of original data included in a first data set and generating a hash data set to be transmitted to a data extraction device; and performing a first noise addition process for adding noise to the hash data.

In addition, a third technology is a data processing program that causes a computer to execute a data processing method including: generating hash data from a plurality of pieces of original data included in a first data set and generating a hash data set to be transmitted to a data extraction device; and performing a first noise addition process for adding noise to the hash data.

In addition, a fourth technology is a data extraction device including: a noise removal unit that removes noise from hash data included in a hash data set generated, in the data processing device, by performing a hash conversion process and a noise addition process to a plurality of pieces of original data included in a first data set; and a data extraction unit that extracts a predetermined piece of the hash data from the hash data set.

In addition, a fifth technology is a data extraction method including: a noise removal unit that removes noise from hash data included in a hash data set generated, in the data processing device, by performing a hash conversion process and a noise addition process to a plurality of pieces of original data included in a first data set; and a data extraction unit that extracts a predetermined piece of the hash data from the hash data set.

Moreover, a sixth technology is a data extraction program that causes a computer to execute a data extraction method including: a noise removal unit that removes noise from hash data included in a hash data set generated, in the data processing device, by performing a hash conversion process and a noise addition process to a plurality of pieces of original data included in a first data set; and a data extraction unit that extracts a predetermined piece of the hash data from the hash data set.

### BRIEF DESCRIPTION OF DRAWINGS

Fig. 1 is a diagram illustrating an outline of differential privacy.
Fig. 2 is a group of graphs illustrating relationships among sample sizes, dictionary sizes, and errors.
Figs. 3A to 3E are graphs illustrating a relationship between data distribution and errors, and Fig. 3F is a graph illustrating relative errors in each distribution.
Fig. 4 is a graph illustrating a relationship between data distribution and privacy indexes.
Fig. 5 is a block diagram illustrating a configuration of a data processing system 10.
Fig. 6 is a block diagram illustrating a configuration of a terminal device 100.
Fig. 7 is a block diagram illustrating a configuration of a data processing device 200.
Fig. 8A is an explanatory diagram of a first dictionary, and Fig. 8B is an explanatory diagram of a hash dictionary.
Fig. 9 is a block diagram illustrating a configuration of a server device 300.
Fig. 10 is a block diagram illustrating a configuration of a data extraction device 400.
Fig. 11 is a sequence diagram illustrating processes in the data processing system 10.
Fig. 12 is an explanatory diagram of compression of a dictionary by hashing.
Fig. 13 is an explanatory diagram of heavy hitter extraction.
Fig. 14 is an explanatory diagram of compressed hash data.
Fig. 15 is an explanatory diagram of heavy hitter extraction.
Fig. 16 is a sequence diagram illustrating processes in the data processing system 10 in a specific example of implementation.
Fig. 17 is a graph illustrating a statistical analysis result in a specific example of implementation.
Fig. 18 is a graph illustrating a statistical analysis result in a specific example of implementation.

### MODE FOR CARRYING OUT THE INVENTION

Hereinafter, an embodiment of the present technology will be described with reference to the drawings. Note that the description will be given in the following order.
<1. Description of differential privacy>
<1. Description of differential privacy>
<2. Embodiment>
   [2-1. Configuration of data processing system 10]
   [2-2. Configurations of terminal device 100 and data processing device 200]
   [2-3. Configurations of server device 300 and data extraction device 400]
   [2-4. Processes in data processing system 10]
<3. Specific examples of implementation>
<4. Modification examples>

### <1. Description of differential privacy>

First, before describing an embodiment of the present technology, differential privacy used in the present technology will be described. The differential privacy is a technology that adds noise to data to be collected so that the data itself can be used while preventing a user and the like who is a subject of the data from being specified. The present technology uses local differential privacy in which noise is added by a device at hand of a user (corresponding to the terminal device 100 according to the embodiment) and anonymized data is collected in the cloud (corresponding to the server device 300 of the embodiment).

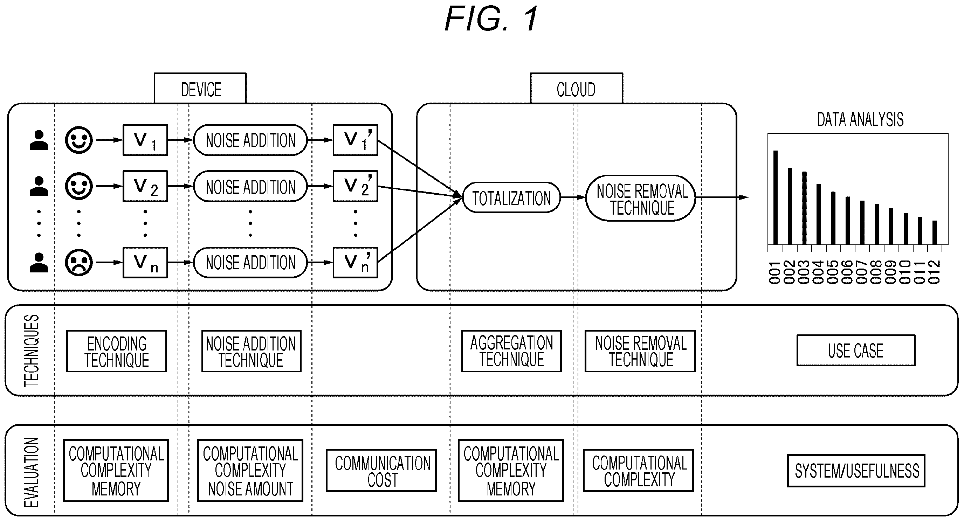

As illustrated in the schematic diagram of Fig. 1, the local differential pry bar includes an encoding technique of encoding data with a device and generating a bit string v1, a noise addition technique of generating data v1' to which noise is added according to a random variable to the bit string v1, an aggregation technique of collecting data to which noise is added, a noise removal technique of removing noise from the aggregated data (The aggregation technique and the noise removal technique are often performed simultaneously and may be referred to collectively as decoding technique.), and a data analysis technique of performing visualization processing according to a use case of the analysis.

In the present technology, when differential privacy is used, "sample size", "dictionary size", and "privacy index" are used as main parameters.

The sample size indicates the total number of data collected in the cloud. The sample size can be defined as "the number of users having the device × the number of pieces of data transmitted from the device to the cloud".

The dictionary size indicates the total number of data types (original data) included in the dictionary. The dictionary is a set of pieces of data collected for every data type indicating a classification of data, and corresponds to the data set in the claims.

The dictionary size is determined by the number of data types. For example, since there are four types of the categories of gender defined in ISO5218, which are male, female, unknown, and inapplicable, the data type is 4, and in this case, the dictionary size is 4. Furthermore, for example, in the case of emoji used for character input in a smartphone or the like, the number of types of those is currently about 2600, the number of data types is about 2600, and in this case, the dictionary size is about 2600. In addition, in a case where position information of a global positioning system (GPS) is mapped on a regional mesh of 1 km2, since the number of meshes is about 380,000, the number of data types is about 380,000, and the dictionary size is about 380,000. Moreover, for example, in a case where the number of contents that can be reproduced in a smartphone or the like is 100,000, the number of data types is 100,000, and in this case, the dictionary size is 100,000.

The privacy index indicates a degree of privacy protection in the differential privacy. As the value of the privacy index decreases, the degree of privacy protection increases, and the amount of noise added to data increases. On the other hand, as the value of the privacy index increases, the degree of privacy protection decreases, and the amount of noise added to the data decreases.

The value of the privacy index is determined to be a predetermined value depending on the sensitivity of the data to be handled. For example, in a case where anonymization is desired by adding noise to emoji used for character input in a smartphone or the like, the privacy index is set to 4, and in a case of healthcare information such as pulses, the privacy index is set to 2. Note that the specific values of these privacy indexes are merely examples, and the present technology is not limited to these values.

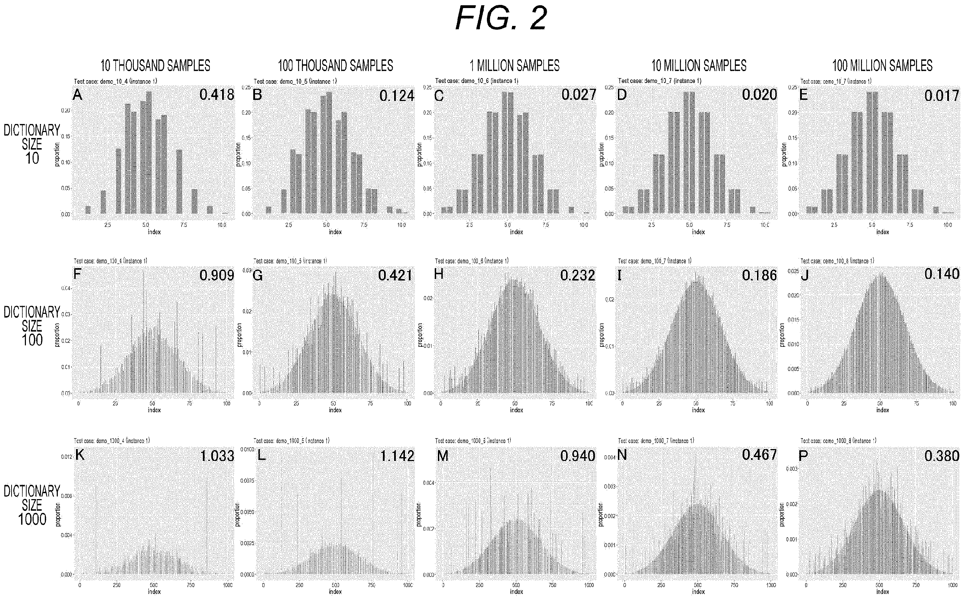

Fig. 2 is a group of graphs illustrating a relationship among sample sizes, dictionary sizes, and errors in a case where the privacy index is a predetermined value. The error is a difference between a measurement value (hereinafter, referred to as a correct value) of data to which noise is not added and a measurement value (referred to as a noise-added measurement) of data to which noise is added by differential privacy. In the graphs of Fig. 2, among the bar graphs each having two bars arranged side by side, the bars in the right side indicate measurement values (correct values) of data to which noise is not added, and the bars in the left side indicate measurement values (noise-added measurement values) of data to which noise is added by differential privacy.

In Fig. 2, it is assumed that the upper graphs A to E have a dictionary size of 10, the middle graphs F to J have a dictionary size of 100, and the lower graphs K to P have a dictionary size of 1000.

The graphs A, F, and K arranged vertically have a sample size of 10,000. Furthermore, the graphs B, G, and L arranged vertically have a sample size of 100,000. Furthermore, the graphs C, H, and M arranged vertically have a sample size of 1 million. Furthermore, the graphs D, I, and N arranged vertically have a sample size of 10 million. Further, the graphs E, J, and P arranged vertically have a sample size of 100 million. Note that it is assumed that the privacy indexes of all the graphs are the same.

The value described in the upper right of each graph is an error between the correct value and the noise-added measurement value in the graph.

As can be seen from the group of graphs in Fig. 2, by comparing the graphs having the same sample size, the smaller the dictionary size, the smaller the error. In addition, by comparing the graphs having the same dictionary size, it can be seen that the error becomes smaller as the sample size is larger. In the differential privacy, the smaller the error between the correct value and the noise-added measurement value is, the more reliable the data can be acquired while protecting the privacy of the data, which is preferable.

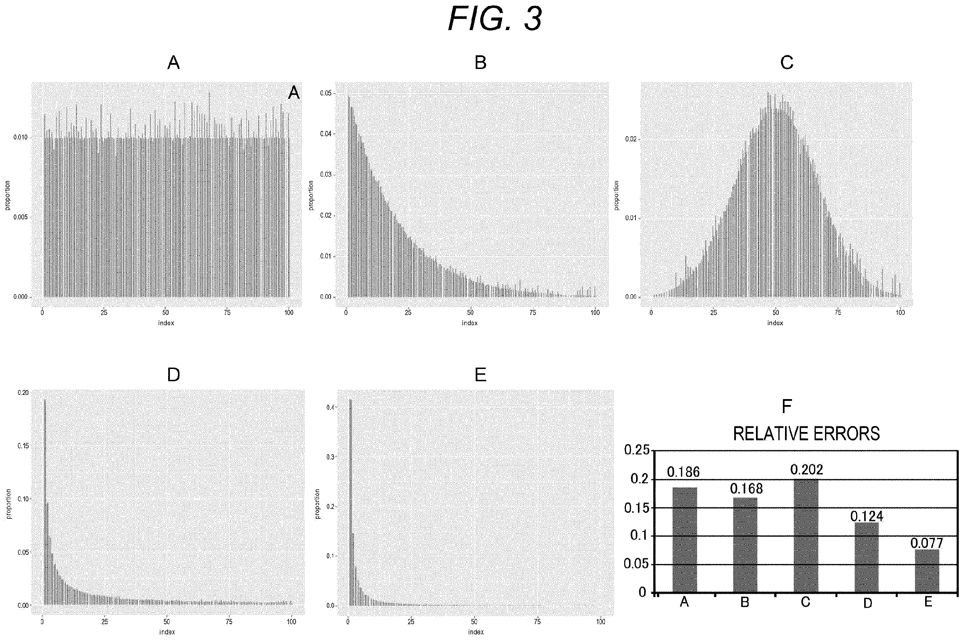

Figs. 3A to 3E are graphs illustrating a relationship between data distribution and errors in correct values and noise-added measurement values, and Fig. 3F is a graph illustrating relative errors in each distribution. It is assumed that each of the graphs of Figs. 3A to 3E has the same sample size, the same dictionary size, and the same privacy index. As can be seen from Fig. 3F, even if the sample size, the dictionary size, and the privacy index are the same, the relative error varies depending on the data distribution.

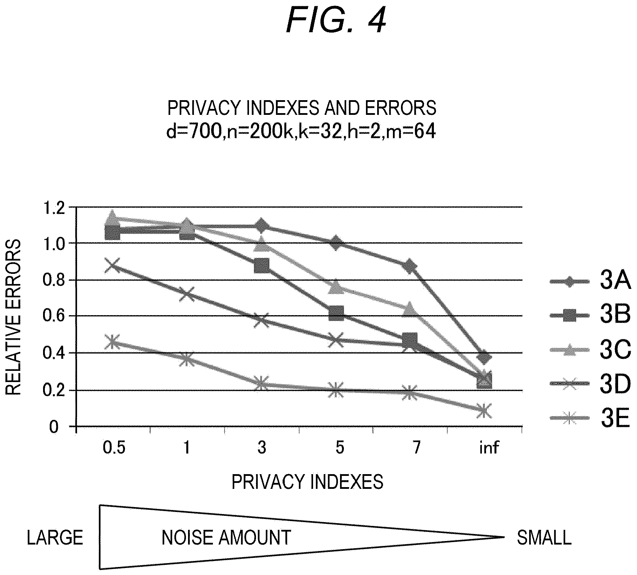

Fig. 4 is a graph illustrating a relationship between each type of data distribution and privacy index values illustrated in Figs. 3A to 3E. As can be seen from Fig. 4, even if the distribution is different, as the privacy index is made smaller, the amount of noise to be added to the data increases and the error also becomes larger. On the other hand, as the privacy index is made larger, the amount of noise to be added to the data reduces, and the error also becomes smaller.

From such relationship among the sample size, the dictionary size, and the privacy index, it can be seen that the sample size, the dictionary size, and the privacy index have the following trade-off relationship.

In a case where the dictionary size is constant and the privacy index is constant, the error becomes larger in a case where the sample size is smaller.

Furthermore, in a case where the dictionary size is small, the error is small even if the sample size is small. On the other hand, in a case where the dictionary size is large, the error is large even if the sample size is large.

Moreover, in a case where the sample size is constant and the dictionary size is constant, the error becomes larger as the privacy index is made smaller, and the error becomes smaller as the privacy index is made larger. Therefore, it is necessary to further increase the sample size in order to increase the privacy strength and increase the reliability.

In the local differential privacy, an error that is a difference between statistical results of correct values and noise-added measurement values is used as an evaluation index. Therefore, in a case where the sample size is the same and the dictionary size is the same, it is preferable local differential privacy that the error does not change even if the noise amount is made larger to enhance the sensitivity. Furthermore, the local differential privacy is preferable if the error does not change even if the sample size is made smaller in a case where the dictionary size is the same and the privacy index is the same. In general, in order to increase the sample size, it is necessary to obtain a large number of measurement values (data), which is costly.

Google's RAPPOR, which has been evaluated as a benchmark for local differential privacy, can handle the dictionary sizes of 10,000. However, currently, in the RAPPOR, a sample size of 100 trillion is required for analysis of data having a dictionary size of 1 million scale, and there is a problem that analysis cannot be performed.

### <2. Embodiment>

### [2-1. Configuration of data processing system 10]

Next, a configuration of the data processing system 10 using the above-described differential privacy will be described. In this embodiment, an example in which differential privacy is used in data collection in which a data type (original data) constituting a dictionary as a data set is a title of content will be described. In the present embodiment, content titles and content reproduction count information are acquired from the terminal device 100 and used for statistical analysis or the like.

The content may be any content as long as it can be reproduced by the terminal device 100 and the number of times of reproduction can be counted, and there may be audio content such as music and video content such as movies, for example. Furthermore, the content may be reproduced on a streaming service, on an Internet service such as a movie sharing site, or the like, in addition to the content that is reproducible content data possessed by the user to be stored in the terminal device 100.

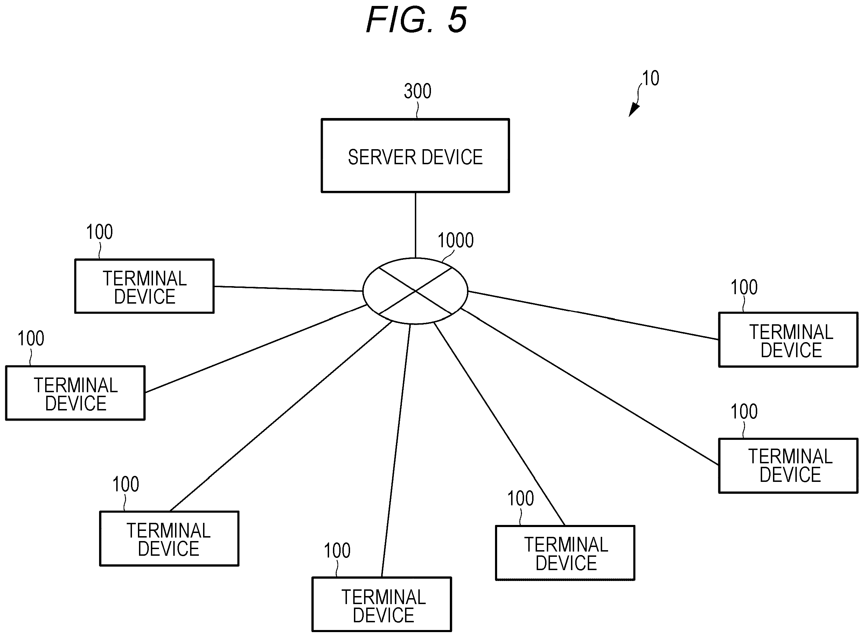

As illustrated in Fig. 5, the data processing system 10 includes a plurality of terminal devices 100 and a server device 300. The server device 300 and the plurality of terminal devices 100 are connected via a network 1000, which is the Internet and the like. Note that, for convenience of description and drawings, seven terminal devices 100 are described, but there are more terminal devices 100 connected to the server device 300.

The server device 300 is a device for collecting data from the terminal devices 100 using the differential privacy, which is operated by, for example, a manufacturer that manufactures the terminal devices 100 or a company that provides content providing services. The server device 300 corresponds to the cloud in the above description of the differential privacy.

The terminal device 100 is, for example, a smartphone capable of reproducing contents and connecting to the network 1000. The terminal device 100 periodically or at a predetermined timing transmits a log including the title of the content reproduced by itself and the like to the server device 300. Details of the log will be described later.

In a case where it is difficult to perform statistical analysis or the like due to a large amount of data transmitted from the terminal device 100 to the server device 300, the data processing system 10 reduces the amount of data and makes it easy to handle the data while suppressing the influence on the analysis result of the data.

Note that transmission and reception of data and logs are performed by a communication unit 102 of the terminal device 100 and a communication unit 302 of the server device 300, but data and logs are all exchanged between a data processing device 200 and a data extraction device 400. Therefore, for convenience of description, it is assumed that transmission and reception are performed in the data processing device 200 and the data extraction device 400.

### [2-2. Configurations of terminal device 100 and data processing device 200]

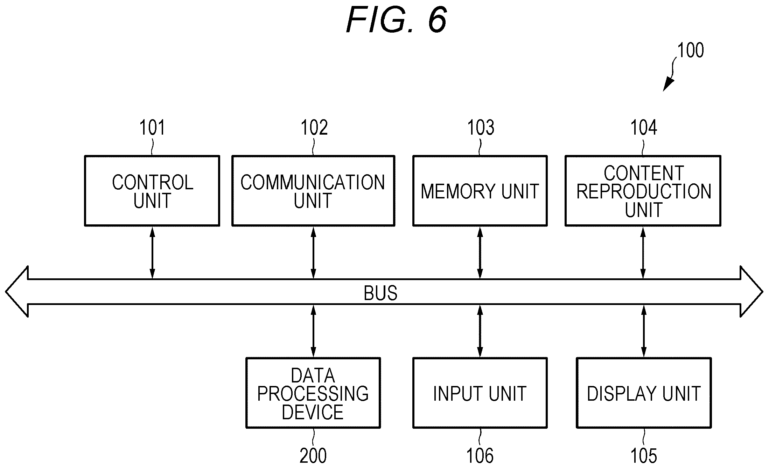

Next, a configuration of the terminal device 100 will be described. As illustrated in Fig. 6, the terminal device 100 includes a control unit 101, the communication unit 102, a memory unit 103, a content reproduction unit 104, a display unit 105, an input unit 106, and the data processing device 200. Note that, for convenience of description and drawings, only details of a single terminal device 100 is illustrated although there are many terminal devices 100 connected to the server device 300.

The control unit 101 includes a central processing unit (CPU), a random access memory (RAM), a read only memory (ROM), and the like. The ROM stores programs and the like to be read and operated by the CPU. The RAM is used as a work memory of the CPU. The CPU performs overall control of the entire terminal device 100 by executing various processes according to the program stored in the ROM and issuing commands.

The communication unit 102 is a communication module that communicates with other devices and the network 1000 according to a predetermined communication standard. Examples of the communication method include a wireless local area network (LAN) such as wireless fidelity (Wi-Fi), a fourth generation mobile communication system (4G), a fifth generation mobile communication system (5G), broadband, and Bluetooth (registered trademark).

The memory unit 103 is a storage medium including, for example, a hard disc drive (HDD), a semiconductor memory, a solid state drive (SSD), and the like, and stores data such as an application and a program in addition to content data such as image data, moving image data, audio data, and text data.

The content reproduction unit 104 performs a reproduction process of content stored in the memory unit 103 or content streamed via the network 1000. The content reproduction unit 104 can count the number of times of reproduction of the content and output reproduction count data. Note that, in a case where the content is streamed, the reproduction count information may be acquired from a server of a streaming source or the like.

The display unit 105 is a display device for displaying content such as an image and a video, a user interface, and the like. The display device includes, for example, a liquid crystal display (LCD), a plasma display panel (PDP), an organic electro luminescence (EL) panel, and the like.

The input unit 106 is various input devices for the user to input an instruction to the terminal device 100. As the input unit 106, there are a button, a touch screen integrally formed with the display unit 105, and the like. In a case where an input is made to the input unit 106, a control signal corresponding to the input is generated and output to the control unit 101.

The data processing device 200 is configured by the terminal device 100 executing a program. The program may be installed in the terminal device 100 in advance, or may be downloaded, distributed in a storage medium, or the like, and installed by the user. Note that the data processing device 200 may be realized not only by a program but also by combining hardware such as a dedicated device, a circuit, or the like having the relevant function.

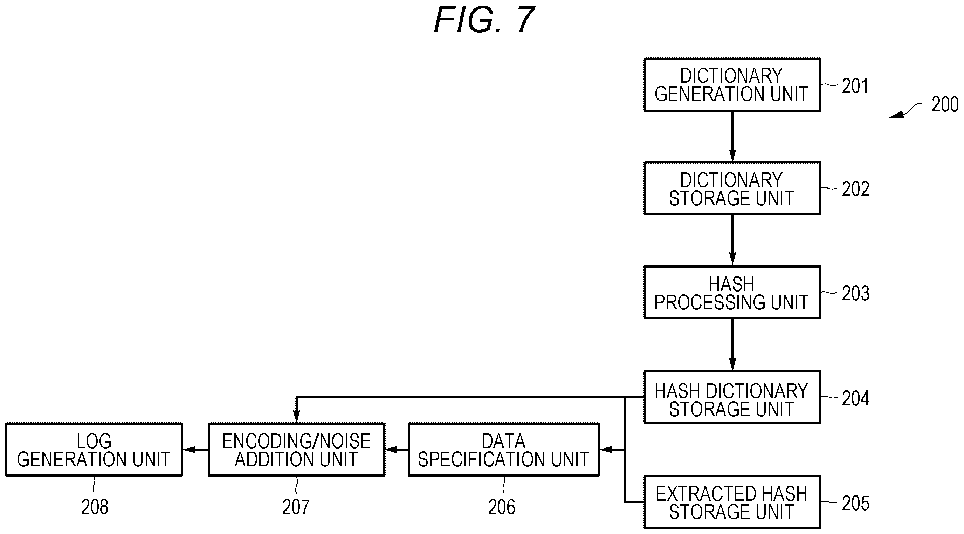

As illustrated in Fig. 7, the data processing device 200 includes a dictionary generation unit 201, a dictionary storage unit 202, a hash processing unit 203, a hash dictionary storage unit 204, an extracted hash storage unit 205, a data specification unit 206, an encoding/noise addition unit 207, and a log generation unit 208.

The dictionary generation unit 201 acquires a title of reproducible content from the content reproduction unit 104 and generates a first dictionary as a first data set. In this case, the content title corresponds to the data type (original data) constituting the first dictionary. For example, in a case where the terminal device 100 can reproduce 100,000 contents, the dictionary size is 100,000.

The first dictionary generated by the dictionary generation unit 201 is stored in the dictionary storage unit 202. Furthermore, in a case where the first dictionary is shared between the data processing device 200 and the data extraction device 400, the first dictionary is transmitted to the data processing device 200 and the data extraction device 400 and stored in the dictionary storage unit 202 of the data extraction device 400. Note that, since content that can be reproduced by the user is increased or decreased as the user purchases content, deletes content, adds new content, or the like, the dictionary may be periodically updated by the dictionary generation unit 201.

The dictionary storage unit 202 is a memory processing unit for storing, in the memory unit 103, the first dictionary generated by the dictionary generation unit 201.

The hash processing unit 203 generates hash data from the content title of the first dictionary by using the hash function to hash the content title to generate a hash dictionary. The hash dictionary corresponds to the hash data set in the claims. In the present technology, the first dictionary is compressed by hashing. Details of compression of the dictionary by hashing will be described later. Note that the data processing device 200 and the data extraction device 400 need to perform hash processing on the first dictionary using a common hash function.

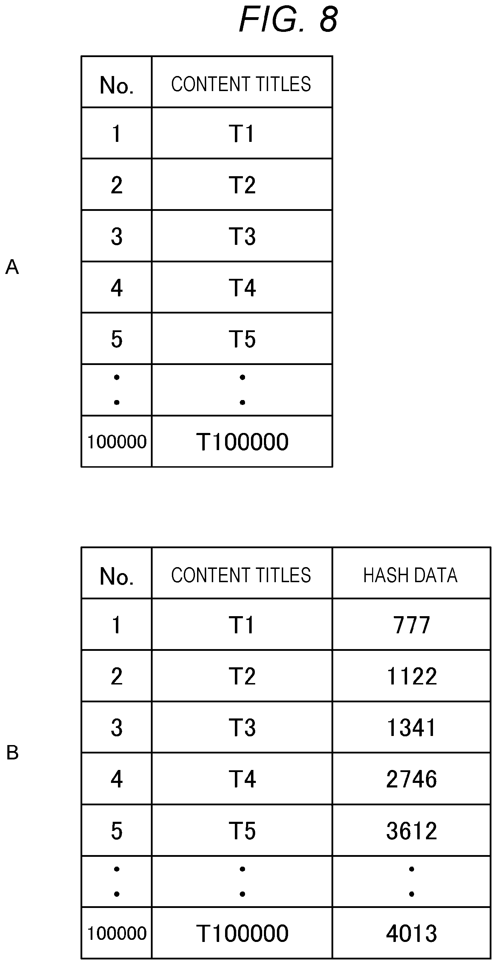

As illustrated in Fig. 8A, the first dictionary is a list of titles of content that can be reproduced by the terminal device 100. The title of the content corresponds to the data type constituting the first dictionary.

The hash dictionary storage unit 204 is a memory processing unit for storing, in the memory unit 103, the hash dictionary generated by the hash processing unit 203. As illustrated in Fig. 8B, the hash dictionary is a list in which a content title and hash data generated from the content title are associated with each other.

The extracted hash storage unit 205 is a memory processing unit for storing, in the memory unit 103, the same hash data as the extracted hash data extracted by the data processing device 400. The extracted hash data is hash data extracted as a most frequent value (heavy hitter) by the data extraction device 400 from the hash data included in the first dictionary transmitted from the plurality of terminal devices 100 to the server device 300. Details of the extracted hash data will be described later.

The data specification unit 206 refers to the extracted hash data information received from the data extraction device 400 and specifies the HH hash data extracted by the data extraction device 400 from the hash dictionary in the data processing device 200 itself. The extracted hash data information is identification information for specifying the extracted hash data extracted by the data extraction device 400.

The encoding/noise addition unit 207 performs an encoding process and a noise addition process on data to be transmitted to the data extraction device 400. The amount of noise to be added is determined in advance on the basis of the privacy index.

The log generation unit 208 generates a log to be transmitted to the data extraction device 400. In addition to the hash dictionary subjected to the encoding process and the noise addition process, the log includes reproduction count information of the content title which is the state of the hash data included in the hash dictionary. The reproduction count information can be acquired from the content reproduction unit 104. Moreover, the log includes a privacy index which is parameter information of differential privacy, identification information (ID) of the terminal device 100, a time stamp, and the like. The generated log is transmitted to the data extraction device 400 of the server device 300 via the network 1000 by communication by the communication unit 102. Note that unchanged information such as a privacy index and identification information does not need to be included in the log as long as the information is shared between the terminal device 100 and the server device 300 in advance.

The terminal device 100 and the data processing device 200 are configured as described above. Note that the dictionary storage unit 202, the hash dictionary storage unit 204, and the extracted hash storage unit 205 may be configured in the memory unit 103 of the terminal device 100, or may be included in the data processing device 200 as a storage unit.

### [2-3. Configurations of server device 300 and data extraction device 400]

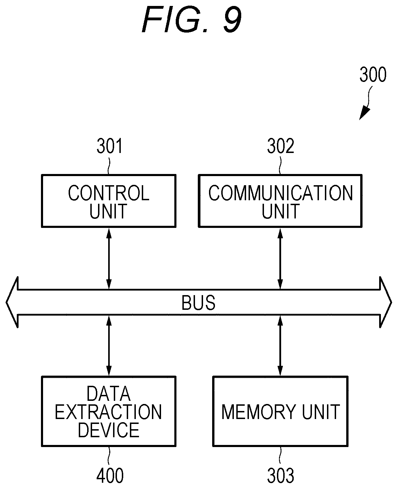

Next, a configuration of the server device 300 will be described. As illustrated in Fig. 9, the server device 300 includes a control unit 301, the communication unit 302, a memory unit 303, and the data extraction device 400.

The control unit 301 includes a CPU, a RAM, a ROM, and the like. The CPU performs overall control of the entire server device 300 by executing various processes according to a program stored in the ROM and issuing commands.

The communication unit 302 is a communication module that communicates with the terminal device 100 and the Internet according to a predetermined communication standard. Examples of the communication method include wireless LAN such as Wi-Fi, 4G, 5G, broadband, Bluetooth (registered trademark), and the like.

The memory unit 303 is a storage medium including, for example, an HDD, a semiconductor memory, an SSD, and the like, and stores an application, a program, a log transmitted from the terminal device 100, data, and the like.

The data extraction device 400 is a processing device configured by the server device 300 executing a program. The program may be installed in the server device 300 in advance, or may be downloaded, distributed in a storage medium, or the like, and installed by the user. Note that the data extraction device 400 may be realized not only by a program but also by combining hardware such as a dedicated device, a circuit, or the like having the relevant function.

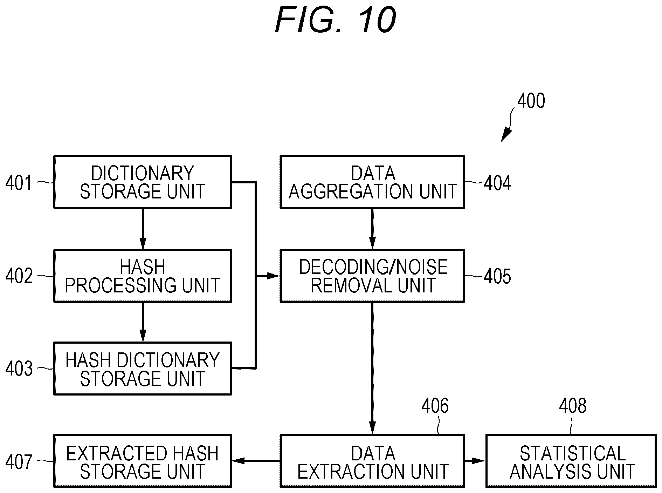

As illustrated in Fig. 10, the data extraction device 400 includes a dictionary storage unit 401, a hash processing unit 402, a hash dictionary storage unit 403, a data aggregation unit 404, a decoding/noise removal unit 405, a data extraction unit 406, an extracted hash storage unit 407, and a statistical analysis unit 408.

The dictionary storage unit 401 is a memory processing unit for storing, in the memory unit 303, the same first dictionary as the first dictionary in the data processing device 200. The first dictionary may be generated by the dictionary generation unit 201 of the data processing device 200 and transmitted to the data extraction device 400, or may be generated by the data extraction device 400 with reference to a title of a known content. For example, since content in a streaming service or a video sharing site can be reproduced by anyone anywhere as long as being connected to the network 1000, the data processing device 200 and the data extraction device 400 can have the same first dictionary.

The hash processing unit 402 generates hash data from the content title of the first dictionary, thereby hashing the content title to generate a hash dictionary. The same hash function as that used by the hash processing unit 203 in the data processing device 200 is used to generate the hash data. Note that, instead of generating the hash dictionary by the data extraction device 400, the hash dictionary generated by the data processing device 200 may be transmitted to the data extraction device 400 and shared.

The hash dictionary storage unit 403 is a memory processing unit for storing, in the memory unit 303, the hash dictionary generated by the hash processing unit 203.

The data aggregation unit 404 aggregates the first dictionary from the log received from the data processing device 200. The aggregated first dictionary is supplied to the decoding/noise removal unit 405. The first dictionary includes hash data obtained by performing a hashing process, an encoding process, and a noise addition process on a content title which is original data, and reproduction count information of the content title.

The decoding/noise removal unit 405 performs a decode process and a noise removal process on the hash data included in the first dictionary supplied from the data aggregation unit 404. The decoded hash data from which the noise has been removed and which has become the hash data is supplied to the data extraction unit 406.

The data extraction unit 406 extracts a most frequent value (heavy hitter (HH)) from the hash data and the reproduction count information of the content title which is the original data of the hash data. The extraction process in the data extraction unit 406 is performed on the hash data of the first dictionary aggregated from all the logs transmitted from the plurality of terminal devices 100 connected to the server device 300. The extraction of heavy hitters corresponds to the extraction of predetermined hash data from the hash data set in the claims.

The extracted hash data is supplied to the extracted hash storage unit 407 and the statistical analysis unit 408. In the present embodiment, the data extraction unit 406 generates data indicating first ten (top 10) pieces of content in descending order of the number of times of reproduction as heavy hitters. Note that the top 10 values are merely examples, and the present technology is not limited to the values.

The extracted hash storage unit 407 is a memory processing unit for storing, in the memory unit 303, the extracted hash data extracted by the data extraction unit 406.

The statistical analysis unit 408 performs statistical analysis such as creation of a heat map for visualizing a statistical result, reliability, and the like. Note that the statistical analysis unit 408 is not an essential configuration in the present technology.

The server device 300 and the data extraction device 400 are configured as described above. Note that the dictionary storage unit 401, the hash dictionary storage unit 403, and the extracted hash storage unit 407 may be configured in a storage unit of the server device 300, or may be included in the data extraction device 400 as a memory unit.

### [2-4. Processes in data processing system 10]

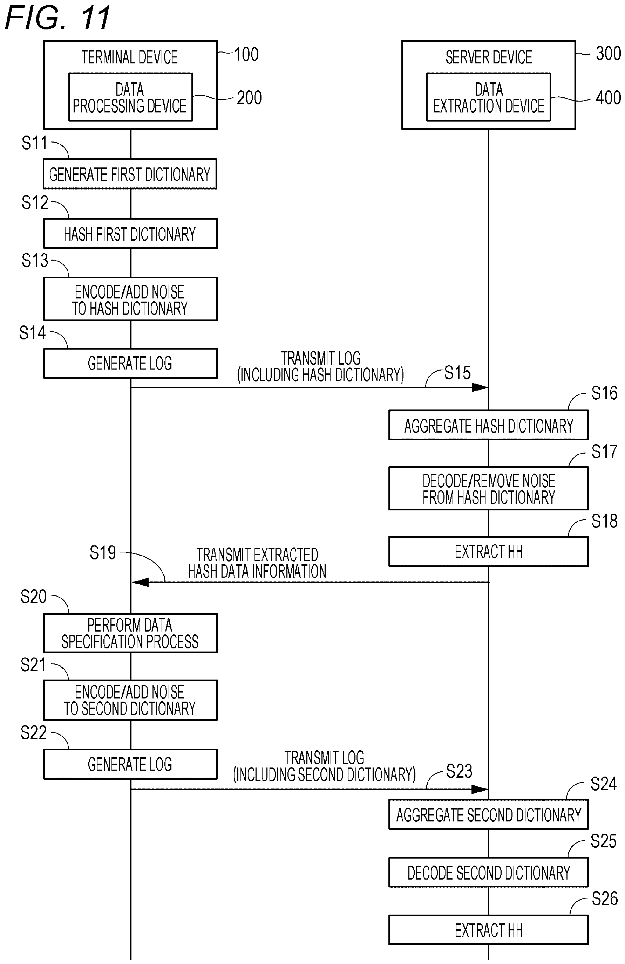

Next, the processes in the data processing system 10 will be described with reference to a sequence diagram in Fig. 11.

First, in step S11, the dictionary generation unit 201 of the data processing device 200 acquires the content title, which is the original data, from the content reproduction unit 104, and generates the first dictionary as the first data set. The content title in this case is the titles of all the contents that can be reproduced by the terminal device 100. Note that the content title may be the title of the content reproduced by the terminal device 100 a predetermined number of times (for example, once) or more. This is because the content title and the reproduction count information thereof are transmitted as the first dictionary to the server device 300 in order to perform statistical analysis of the number of times of reproducing the content or the like, and thus the title of the content having zero count of reproduction does not need to be transmitted to the server device 300. However, the present technology does not exclude the transmission of the title of the content having zero count of reproduction to the server device 300.

Furthermore, in a case where the dictionary size of the first dictionary transmitted from the terminal device 100 to the server device 300 is too large, the predetermined number of times may be set to, for example, 100, and only the title of the content reproduced 100 times or more may be handled. Note that, in a case where the first dictionary generated by the data processing device 200 is shared with the data extraction device 400, the first dictionary is transmitted from the terminal device 100 to the server device 300.

Next, in step S12, the hash processing unit 203 of the data processing device 200 generates the hash dictionary by generating the hash data from the content titles included in the first dictionary and hashing the first dictionary. By this hashing, the dictionary size can be compressed.

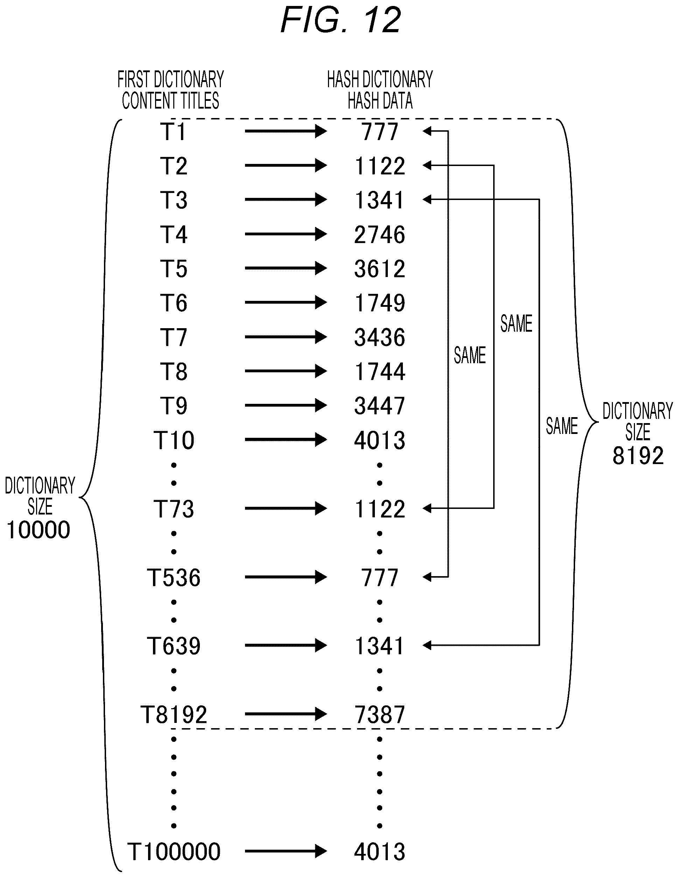

Here, the compression of the dictionary by hashing will be described. As illustrated in Fig. 12, it is assumed that there are 100,000 content titles (T1 to T100,000) as original data constituting the first dictionary. In this case, the dictionary size is 100,000. When the 100,000 content titles are hashed by the same hash function, a plurality of content titles becomes the same hash data (hash collision). By collecting the titles having the same hash data, it is possible to reduce the original data and reduce the dictionary size without reducing the content titles (the dictionary size is 8192 in Fig. 12). By reducing the dictionary size by being compressed by hashing in this manner, it is possible to handle a large-scale dictionary and dictionary data that continues to increase.

The description returns to the description of the sequence diagram. Next, in step S13, the encoding/noise addition unit 207 of the data processing device 200 performs an encoding process and a noise addition process on the hash dictionary. This noise addition process corresponds to the first noise addition process in the claims. At this point, the data included in the hash dictionary is in a state in which the hash data is encoded into a bit string and noise is further added. Next, in step S14, the log generation unit 208 of the data processing device 200 generates a log including the hash dictionary, the reproduction count information of the content title, and the like, and in step S15, the terminal device 100 transmits the log to the server device 300.

In a case where the data extraction device 400 receives the log, the data aggregation unit 404 of the data extraction device 400 aggregates the hash dictionary from the plurality of logs received from the plurality of terminal devices 100, in step S16. A plurality of terminal devices 100 is connected to the server device 300, and logs are received from each of the plurality of terminal devices 100, so that the hash dictionary exists as many as the number of received logs. The aggregated hash dictionary is supplied to the decoding/noise removal unit 405.

Next, in step S17, the decoding/noise removal unit 405 of the data extraction device 400 performs a decoding process and a noise removal process on the hash dictionary. As a result, the data constituting the hash dictionary does not include noise and is in a state of hash data that is not a bit string.

Next, in step S18, the data extraction unit 406 extracts heavy hitters on the basis of the reproduction count information corresponding to the hash data included in the hash dictionary.

Here, the extraction of the heavy hitters will be described. The term of heavy hitter means the most frequent value, and the extraction of heavy hitters means to extract a data type having a large count value from a plurality of data types constituting a hash dictionary.

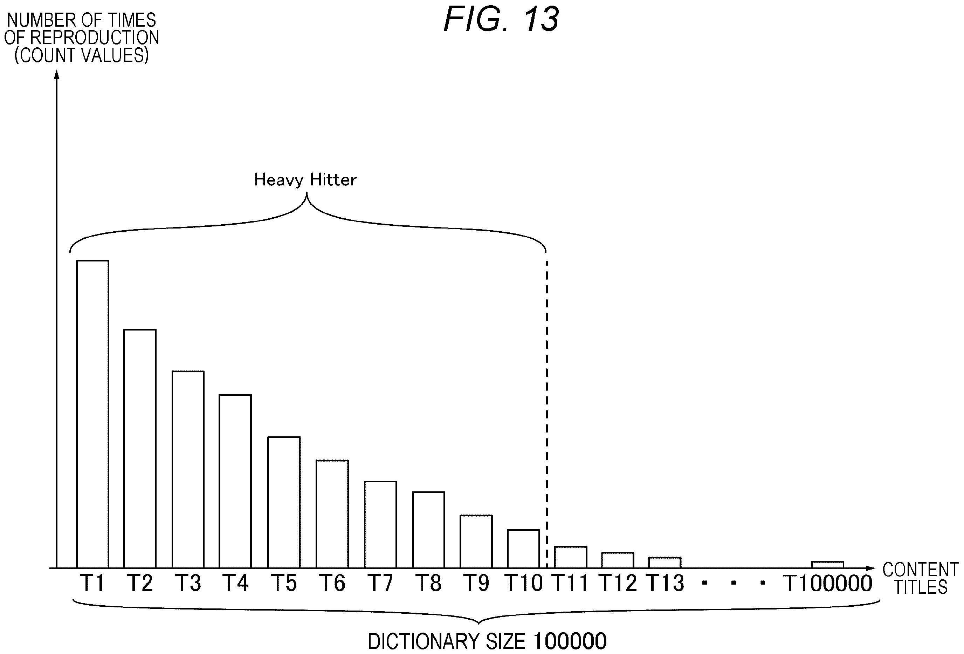

Fig. 13 is a graph in which content titles as original data are arranged in order of the number of times of reproduction of the content as count values. In a case where a large number of pieces of data reflecting intention of users, such as the number of times of reproduction of the content, are arranged in a graph in descending order of count values, the data distribution often becomes a so-called long tail. Furthermore, in statistical analysis, even if a tail portion having a small count value is ignored, there is often no influence on a statistical result. In addition, in statistical analysis, generally, high-order data having a large count value is important, and data of a tail portion having a small count value is often not statistically necessary.

In the analysis of a dictionary having a large dictionary size and a large amount of data, it is important to be able to perform a most frequent value (heavy hitter) analysis which is an analysis for a data type having a large count value. For example, as illustrated in Fig. 13, content titles as original data are extracted in descending order of the number of times of reproduction as a count value from the first place to the tenth place (top 10) as heavy hitters.

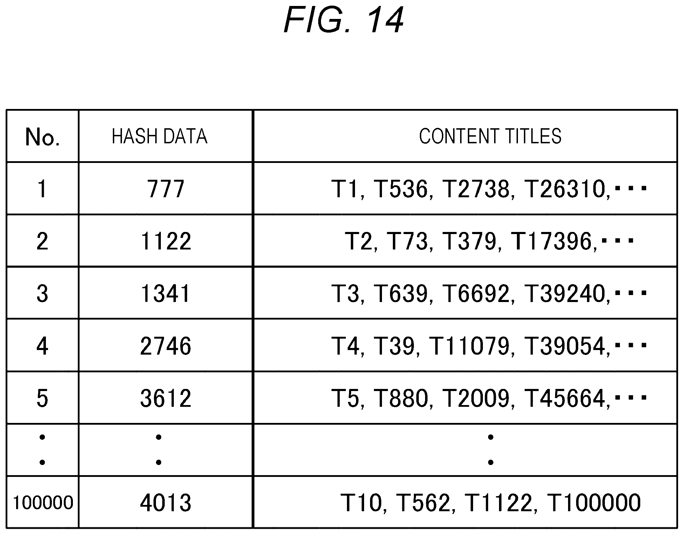

In a case where the dictionary is compressed by hashing, a plurality of content titles corresponds to one piece of hash data as illustrated in Fig. 14. The plurality of content titles becomes the same hash data by the hash process.

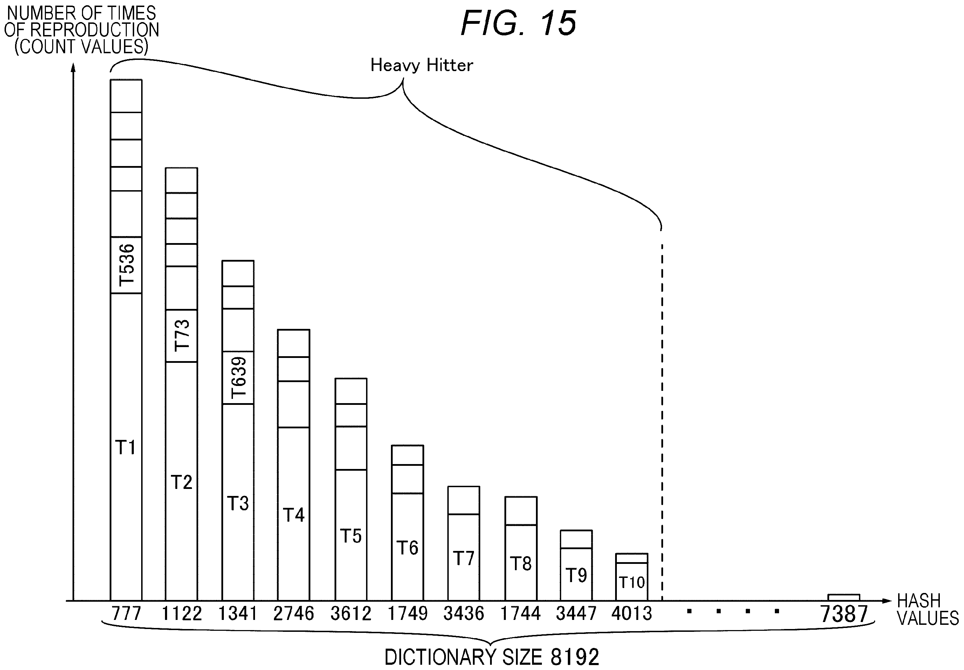

In addition, a graph of the hash data generated from the content title and the number of times of reproduction is as illustrated in Fig. 15. In Fig. 15, the horizontal axis represents the hash data generated from the content titles, and the number of times of reproduction is added together for the content titles that have become the same hash data by hashing. Therefore, the number of times of reproduction for every piece of hash data is larger than that before compression which is illustrated in Fig. 13. In a case where the distribution of the data is long tail, even if the dictionary is hashed, the rank based on the count value is maintained. Note that, although the order is maintained in Fig. 14, the order may change due to the sum of count values by compression of the dictionary.

In this method, many collisions of hashing in which the pieces of hash data happen to be the same. However, since many collisions of the pieces of hash data occur in a tail portion having a small count value, there is a high possibility that a high-order data type before hashing is included in a high-order even after hashing, and it is considered that the influence on statistical analysis is small.

The description returns to the description of the sequence diagram. Next, in step S19, the extracted hash data information indicating the extracted hash data extracted by the data extraction device 400 is transmitted from the server device 300 to the terminal device 100. Note that the data extraction device 400 may transmit the extracted hash data itself to the data processing device 200 instead of the extracted hash data information.

For example, it can be grasped that the content title, which is the original data of the hash data "777", is "T1" by either of the data processing device 200 and the data extraction device 400 using the same hash function. However, the order of the hash data "777" in the heavy hitters is known only by the data extraction device 400. Therefore, the data extraction device 400 needs to transmit the extracted hash data information to the data processing device 200 to inform that the content title corresponding to which hash data is ranked in the heavy hitters.

When the data processing device 200 receives the extracted hash data information, the data specification unit 206 of the data processing device 200 performs a data specification process with reference to the extracted hash data information in step S20.

The data specification process is performed by searching whether or not the extracted hash data indicated by the extracted hash data information and extracted by the data processing device 200 exists in the hash dictionary storage unit 204. Since the extracted hash data is extracted from the plurality of pieces of hash data included in the hash dictionary received by the data extraction device 400 from the plurality of terminal devices 100, the extracted hash data may include hash data that does not exist in the hash dictionary storage unit 204 of the terminal device 100. Therefore, the data specification unit 206 specifies only the hash data existing in the hash dictionary storage unit 204 from the extracted hash data. As a result, only the titles of the content which is extracted as heavy hitters and can be reproduced in the terminal device 100 is transmitted to the data extraction device 400 as the second dictionary. As a result, unlike the first dictionary, the data to be transmitted to the data extraction device 400 as the second dictionary is reduced. The second dictionary corresponds to the second data set in the claims.

As a result of the data specification process, in a case where there is no hash data identical to the extracted hash data in the hash dictionary storage unit 204, there is no data to be transmitted from the data processing device 200 to the data extraction device 400, and thus the process ends here.

As a result of the data specification process, in a case where the same hash data as the extracted hash data exists in the hash dictionary storage unit 204, the data specification unit 206 supplies only the content title, which is the original data corresponding to the extracted hash data, to the encoding unit/noise addition unit 207 as the second dictionary. Unlike the first dictionary, the second dictionary does not include titles of all contents that can be reproduced by the terminal device 100, but includes only original data (content titles) of hash data existing in the terminal device 100 in the extracted hash data extracted by the data extraction device 400.

Next, in step 21, the encoding/noise addition unit 207 of the data processing device 200 performs an encoding process and a noise addition process on the content titles constituting the second dictionary. This noise addition process corresponds to the second noise addition process in the claims.

Next, in step S22, the log generation unit 208 of the data processing device 200 generates a log including the second dictionary and the reproduction count information of the content title included in the second dictionary, and the like, and in step S23, the terminal device 100 transmits the log to the server device 300.

Note that the second dictionary is not hashed in the processes of steps S20 to S22 in the data processing device 200. Therefore, here, the encoding process and the noise addition process are performed on the content title instead of the hash data.

When the server device 300 receives the log, the data aggregation unit 404 of the data extraction device 400 aggregates the second dictionary from the log in step S24. Next, in step S25, the decoding/noise removal unit 405 performs the decoding process and the noise removal process on the second dictionary. Since the second dictionary is not a hash dictionary, the data extraction device 400 can acquire heavy hitters which are extraction data in the state of the content title instead of hash data.

Then, in step S26, the data extraction unit 406 acquires the content title included in the heavy hitters and the reproduction count information thereof from the second dictionary.

The processes in the data processing system 10 are performed as described above. According to the present technology, even in a case where the number of original data is large and the dictionary size is large, by compressing the dictionary size by hashing, the data to be transmitted from the data processing device 200 to the data extraction device 400 can be reduced and the data can be easily handled.

Moreover, since only the original data corresponding to the heavy hitters extracted by the data extraction device 400 is transmitted as the second dictionary from the terminal device 100 to the server device 300, the amount of data to be transmitted is reduced, and the data can be easily handled.

Note that, since the data is in the state of the hash data at the stage of extracting the heavy hitters in the data extraction device 400, there is no possibility that personal information of the user of the terminal device 100 is leaked or privacy is violated. Since the title of the content reproduced by the user and the type of the content specified from the name of the content are the personal information of the user, and the title of the content edited by the user may also include the behavior, taste and preference, family information, and the like of the user, such leakage of the personal information of the user can be prevented by using the differential privacy.

The content titles and the reproduction count information acquired by the data extraction device 400 can be used for various statistical analysis processes.

### <3. Specific examples of implementation>

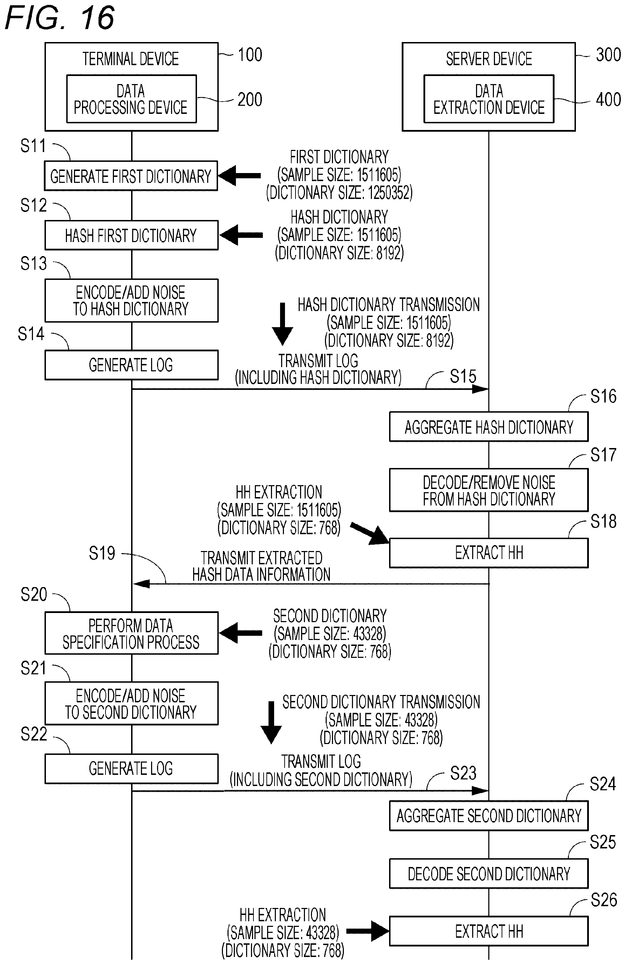

Next, experimental results of performing the above-described processing on specific data will be described with reference to Figs. 16 to 18. In the specific examples, as in the above-described embodiment, the original data is set as the content title, and the count value is set as the number of times of reproduction of the content. Note that the processes in the sequence diagram of Fig. 16 are the same as the processes in Fig. 13.

Assuming that the data is data for one week of content reproduction in the terminal device 100, the sample size of the first dictionary is 1511605, and the dictionary size is 1250252 as illustrated in step S11 of Fig. 15. The dictionary size is the title of the content reproduced by the terminal device 100, and the sample size is the total number of times of reproduction of the content acquired by the data processing device 200.

Note that, here, for convenience of description, the sample size and the dictionary size of the first dictionary are assumed to be those of the first dictionary received from a single data processing device 200, but the sample size and the dictionary size of the first dictionary may be the sum of dictionaries received from a plurality of data processing devices 200 by the data extraction device 400.

By the hashing process in step S12 in the data processing device 200, the dictionary size of the first dictionary has become 8192. The first dictionary is transmitted from the data processing device 200 to the data extraction device 400.

Then, in step S15, the first dictionary having the sample size of 1511605 and the dictionary size of 8192 is transmitted as a log from the terminal device 100 to the server device 300.

In step S18, the data extraction device 400 extracts first 20 (top 20) pieces of hash data (content titles) having the greatest numbers of times of reproduction as heavy hitters. By extracting the top 20 heavy hitters, 768 pieces of extracted hash data were extracted.

Next, 43328 content titles as original data corresponding to 768 pieces of extracted hash data are specified from the sample size 1511605 by the data specification process in step S20 in the data processing device 200.

Then, when the second dictionary is transmitted from the data processing device 200 to the data extraction device 400, in step S26 in the data extraction device 400, the reproduction count information of the content title can be acquired from the second dictionary having the sample size 43328 and the dictionary size 768.

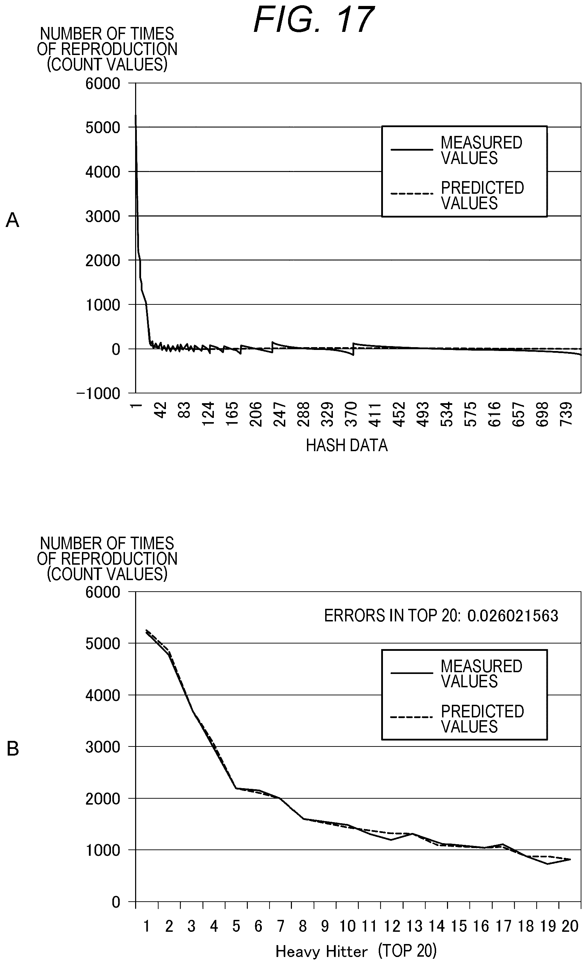

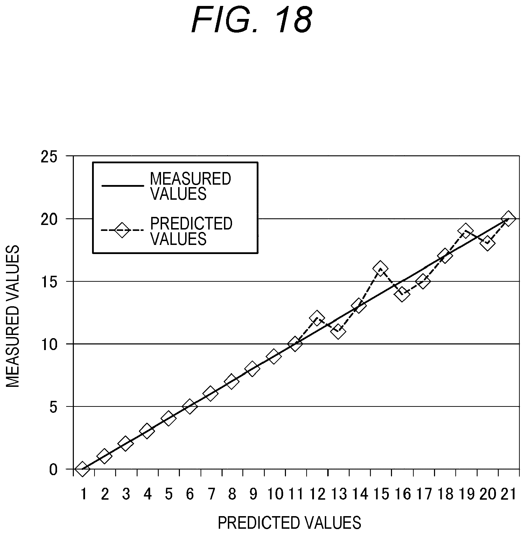

Figs. 17 and 18 illustrate measured values (statistical analysis results of the top 20 of original data as they are) and predicted values (statistical analysis results of the top 20 of data to which the present technology is applied). Fig. 17A illustrates measured values and predicted values, where the horizontal axis represents the hash data and the vertical axis represents the number of times of reproduction (count value). Furthermore, Fig. 17B illustrates measured values and predicted values, where the horizontal axis represents heavy hitters (top 20) and the vertical axis represents the number of times of reproduction (count value). Moreover, in Fig. 18, the horizontal axis represents the order of the heavy hitters in the predicted value, and the vertical axis represents the order of the heavy hitters in the measured value.

As a result, the error between the statistical analysis result of the top 20 of original data as it is and the statistical analysis result of the top 20 of data to which the present technology is applied is 0.026. Furthermore, as illustrated in Fig. 18, the ranking error is 0 in the top 10 and ± 2 in the top 20. As described above, according to the present technology, it is possible to reduce the dictionary size and reduce the data to be transmitted from the terminal device 100 to the server device 300 while suppressing the error in the statistical analysis result to be small, thereby making it easy to handle the data.

### <4. Modification examples>

In the above, an embodiment of the present technology has been described in detail; however, the present technology is not limited to the above described embodiment and various modifications within a scope of the present technology can be made.

In the embodiment, the description has been made using the title of the content and the number of times of reproduction of the content, but the present technology is not limited thereto. For example, the original data may be a product name on a product sales site, a uniform resource locator (URL) of a product page, a URL of an advertisement, or the like, and the count value may be the number of products purchased, the number of clicks on the URL, the number of accesses to the URL, or the like.

In addition, the original data may be a type of emoji used by the user for character input in the terminal device 100, and the count value may be the number of times of use of the emoji. As described above, any data can be applied as long as the data can be handled as statistical data.

Although the terminal device 100 has been described as a smartphone in the embodiment, the terminal device 100 may be a personal computer, a tablet terminal, a camera, a wearable device, a smart speaker, a game device, the server device 300, a pet type/human type robot connectable to the Internet, various sensor devices, various Internet of Things (IoT) devices, or any device capable of transmitting information to the outside, in addition to the smartphone.

Note that the present technology may also have following configurations.
(1) A data processing device including:
   a hash processing unit that generates hash data from a plurality of pieces of original data included in a first data set and generates a hash data set to be transmitted to a data extraction device; and
   a noise addition unit configured to perform a first noise addition process for adding noise to the hash data.
(2) The data processing device according to (1), in which the original data is transmitted to the data extraction device with a corresponding count value.
(3) The data processing device according to (1) or (2), further including a data specification unit that refers to information received from the data extraction device and indicating extracted hash data extracted from the hash data set in the data extraction device and specifies the extracted hash data from the hash data set.
(4) The data processing device according to (3), in which the noise addition unit performs a second noise addition process for adding noise to the original data corresponding to the extracted hash data, which is specified by the data specification unit.
(5) The data processing device according to (4), in which a second data set including noise-added original data is transmitted to the data extraction device.
(6) The data processing device according to any one of (2) to (5), in which the original data is a title of reproducible content.
(7) The data processing device according to (6), in which the count value is a number of times of reproduction of the content.
(8) A data processing method including: generating hash data from a plurality of pieces of original data included in a first data set and generating a hash data set to be transmitted to a data extraction device; and performing a first noise addition process for adding noise to the hash data.
(9) A data processing program that causes a computer to execute a data processing method, the method including:
   generating hash data from a plurality of pieces of original data included in a first data set and generating a hash data set to be transmitted to a data extraction device; and
   performing a first noise addition process for adding noise to the hash data.
(10) A data extraction device including:
   a noise removal unit that removes noise from hash data included in a hash data set generated, in the data processing device, by performing a hash conversion process and a noise addition process to a plurality of pieces of original data included in a first data set; and
   a data extraction unit that extracts a predetermined piece of the hash data from the hash data set.
(11) The data extraction device according to (10),
   in which the hash data is associated with a count value corresponding to the original data, and
   the data extraction unit extracts the predetermined piece of the hash data on the basis of the count value.
(12) The data extraction device according to (10) or (11), in which extracted hash data information indicating the hash data extracted by the data extraction unit is transmitted to the data processing device.
(13) The data extraction device according to any one of (10) to (12),
   in which the noise removal unit removes noise from the original data included in a second data set transmitted from the data processing device on the basis of the extracted hash data information, and
   the data extraction unit extracts, on the basis of the count value, the original data in which noise is removed from the second data set.
(14) The data extraction device according to any one of (11) to (13), in which the original data is a title of reproducible content.
(15) The data extraction device according to (14), in which the count value is a number of times of reproduction of the content.
(16) The data extraction device according to (15), in which the data extraction unit extracts a predetermined number of pieces of the hash data, from the hash data set, in descending order of the number of times of reproduction of the content.
(17) A data extraction method including:
   a noise removal unit that removes noise from hash data included in a hash data set generated, in the data processing device, by performing a hash conversion process and a noise addition process to a plurality of pieces of original data included in a first data set; and
   a data extraction unit that extracts a predetermined piece of the hash data from the hash data set.
(18) A data extraction program that causes a computer to execute a data extraction method, the method including:
   a noise removal unit that removes noise from hash data included in a hash data set generated, in the data processing device, by performing a hash conversion process and a noise addition process to a plurality of pieces of original data included in a first data set; and
   a data extraction unit that extracts a predetermined piece of the hash data from the hash data set.

### REFERENCE SIGNS LIST

- 200: Data processing device
- 203: Hash processing unit
- 206: Data specification unit
- 207: Encoding/noise addition unit
- 400: Data extraction device
- 405: Decoding/noise removal unit
- 406: Data extraction unit

## Claims

1. A data processing device comprising:
a hash processing unit that generates hash data from a plurality of pieces of original data included in a first data set and generates a hash data set to be transmitted to a data extraction device; and
a noise addition unit configured to perform a first noise addition process for adding noise to the hash data.

2. The data processing device according to claim 1, wherein
the original data is transmitted to the data extraction device with a corresponding count value.

3. The data processing device according to claim 1, further comprising
a data specification unit that refers to information received from the data extraction device and indicating extracted hash data extracted from the hash data set in the data extraction device and specifies the extracted hash data from the hash data set.

4. The data processing device according to claim 3, wherein
the noise addition unit performs a second noise addition process for adding noise to the original data corresponding to the extracted hash data, which is specified by the data specification unit.

5. The data processing device according to claim 4, wherein
a second data set including noise-added original data is transmitted to the data extraction device.

6. The data processing device according to claim 2, wherein
the original data is a title of reproducible content.

7. The data processing device according to claim 6, wherein
the count value is a number of times of reproduction of the content.

8. A data processing method comprising:
generating hash data from a plurality of pieces of original data included in a first data set and generating a hash data set to be transmitted to a data extraction device; and
performing a first noise addition process for adding noise to the hash data.

9. A data processing program that causes a computer to execute a data processing method, the method comprising:
generating hash data from a plurality of pieces of original data included in a first data set and generating a hash data set to be transmitted to a data extraction device; and
performing a first noise addition process for adding noise to the hash data.

10. A data extraction device comprising:
a noise removal unit that removes noise from hash data included in a hash data set generated, in the data processing device, by performing a hash conversion process and a noise addition process to a plurality of pieces of original data included in a first data set; and
a data extraction unit that extracts a predetermined piece of the hash data from the hash data set.

11. The data extraction device according to claim 10,
wherein the hash data is associated with a count value corresponding to the original data, and
the data extraction unit extracts the predetermined piece of the hash data on a basis of the count value.

12. The data extraction device according to claim 10, wherein
extracted hash data information indicating the hash data extracted by the data extraction unit is transmitted to the data processing device.

13. The data extraction device according to claim 10,
wherein the noise removal unit removes noise from the original data included in a second data set transmitted from the data processing device on a basis of the extracted hash data information, and
the data extraction unit extracts, on a basis of the count value, the original data in which noise is removed from the second data set.

14. The data extraction device according to claim 11, wherein
the original data is a title of reproducible content.

15. The data extraction device according to claim 14, wherein
the count value is a number of times of reproduction of the content.

16. The data extraction device according to claim 15, wherein
the data extraction unit extracts a predetermined number of pieces of the hash data, from the hash data set, in descending order of the number of times of reproduction of the content.

17. A data extraction method, comprising:
a noise removal unit that removes noise from hash data included in a hash data set generated, in the data processing device, by performing a hash conversion process and a noise addition process to a plurality of pieces of original data included in a first data set; and
a data extraction unit that extracts a predetermined piece of the hash data from the hash data set.

18. A data extraction program that causes a computer to execute a data extraction method, the method comprising:
a noise removal unit that removes noise from hash data included in a hash data set generated, in the data processing device, by performing a hash conversion process and a noise addition process to a plurality of pieces of original data included in a first data set; and
a data extraction unit that extracts a predetermined piece of the hash data from the hash data set.
